# EUROPÄISCHE PATENTANMELDUNG

(11) **EP 1 213 826 A2**
(43) Veröffentlichungstag der Anmeldung: **12.06.2002**
(21) Anmeldenummer: 01250433.8
(22) Anmeldetag: 07.12.2001
(51) Int. Cl.: H02M 7/48

(54) **Schaltenlastungsnetzwerk für Leistungshalbleiterschalter**

(30) Priorität: 07.12.2000 DE 10060766
(71) Anmelder: Bombardier Transportation GmbH, 13627 Berlin (DE)
(72) Erfinder: Hilpert, Gerald, 79789 Lauchringen (DE); Steiner, Michael, 8050 Zürich (CH); Salama, Samir, Dr., 13591 Berlin (DE)
(74) Vertreter: Cohausz & Florack

(57) **Zusammenfassung**

Die vorliegende Erfindung offenbart verschiedene Ausführungsbeispiele für Schaltentlastungsnetzwerke für Leistungshalbleiterschalter. In diesen Schaltentlastungsnetzwerken ist ein Schwingkreisstromrichter entweder in Reihe oder parallel zu einem Abschaltentlastungskondensator angeordnet, der zur Rückführung der überschüssigen Energie des Abschaltentlastungskondensators dient und unabhängig von den Leistungshalbleiterschaltern ansteuerbar ist.

Die offenbarten Schaltentlastungsnetzwerke für Leistungshalbleiterschalter weisen alle zumindest die folgenden Eigenschaften auf:
- Die Ansteuerung der Halbleiterschalter der Schwingkreisstromrichters ist unabhängig von der der Leistungshalbleiterschalter des Haupt-Stromrichters realisierbar.
- Die auftretende nominelle Betriebsüberspannung am Abschaltentlastungskondensator kann sehr klein gehalten werden, beispielsweise unter 100 V.
- Der Schaltungsaufwand ist verglichen mit herkömmlichen Schaltungen niedrig.
- Die Halbleiterschalter des Schwingkreisstromrichters werden unter Soft-Turn-On bzw. Einschaltentlastung und Soft-Turn-Off bzw. Abschaltentlastung betrieben (Resonanzbetrieb).
- Die Schaltung kann mit vertretbarem Aufwand für die Einschalt- und Abschaltentlastung des Hauptstromrichters erweitert werden.
- Die Ansteuerungen der erfindungsgemäßen Schaltungsvarianten sind zudem sehr einfach zu realisieren, da sie unabhängig von denen der Leistungshalbleiterschalter des Hauptstromrichters arbeiten.

## Beschreibung

Die vorliegende Erfindung bezieht sich auf das Gebiet der Leistungselektronik, insbesondere auf das Gebiet der Stromrichtertechnik und hierbei besonders auf Schaltentlastungsnetzwerke für Leistungshalbleiterschalter.

Durch die fortschreitende Erhöhung von Stromtragfähigkeit und Schaltvermögen, werden Insulated Gate Bipolar Transistoren bzw. Bipolartransistoren mit isoliert angeordneten Steuerelektroden beziehungsweise IGBTs immer häufiger auch als Leistungshalbleiterschalter in Hochleistungsstromrichtern eingesetzt. IGBTs benötigen, im Gegensatz zu Gate Turn Off Thyristoren beziehungsweise GTO-Thyristoren prinzipiell kein Schaltentlastungsnetzwerk. Dennoch werden diese, bei hohen Schaltfrequenzen und hoher Schaltleistung zur Verminderung der Schaltverlustleistung der Halbleiterschalter bevorzugt eingesetzt.

Bei konventionellen Beschaltungsnetzwerken, bestehend aus mindestens einer Strombegrenzungsdrosselspule, einer Beschaltungsdiode, einem Abschaltentlastungskondensator und einem Beschaltungswiderstand, wird die in den Beschaltungskomponenten gespeicherte Energie, im wesentlichen im Beschaltungswiderstand in Wärme umgesetzt. Bei Hochleistungsstromrichtern ist der Aufwand für einen Beschaltungswiderstand, wegen der hohen Verlustleistung und der hohen Betriebsspannung erheblich. Deshalb wird kontinuierlich nach neuen Lösungsansätzen gesucht.

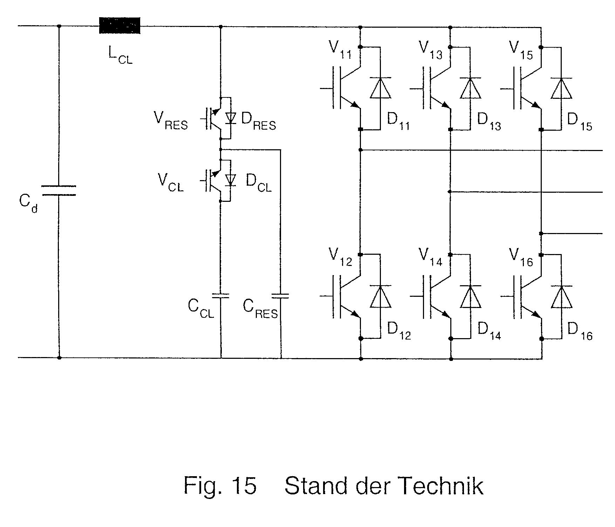

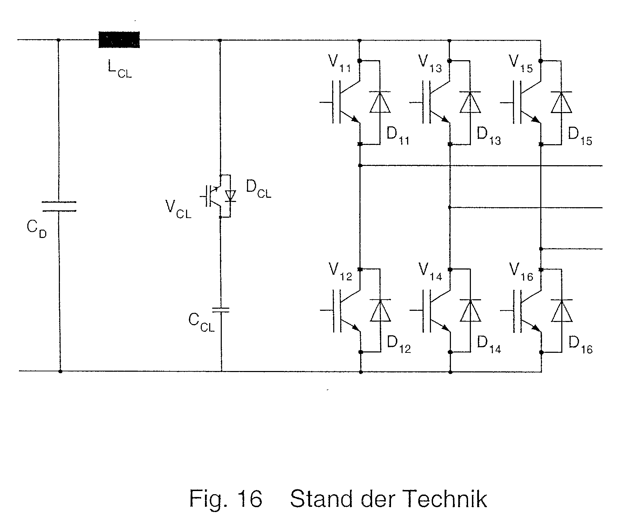

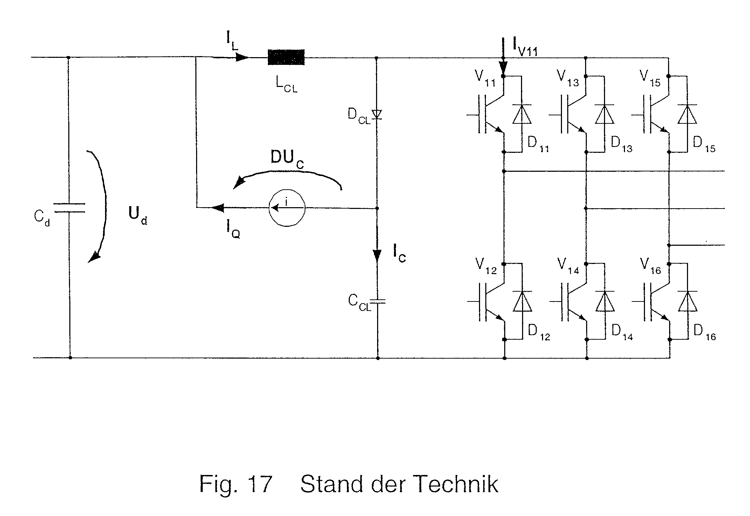

Aus der DE 42 33 573 C2 ist ein Verfahren zur Schaltentlastung von IGBTs bekannt. Das zugehörige Schaltentlastungsnetzwerk ist in Fig. 15 ersichtlich. Danach wird zur Schaltentlastung der Leistungshalbleiterschalter, beispielsweise IGBTs, V₁₁ bis V₁₆ und den zu ihnen antiparallel geschalteten Leistungsdioden D₁₁ bis D₁₆ ein resonantes Beschaltungsnetzwerk, bestehend aus der Strombegrenzungsdrosselspule L_{CL}, dem Resonanzkondensator C_{RES}, dem Steuerhalbleiterschalter V_{RES} mit antiparalleler Diode D_{RES} und dem Abschaltentlastungskondensator C_{CL} dem Steuerhalbleiterschalter V_{CL} sowie der antiparallel zu ihm geschalteten Diode D_{CL} eingesetzt. Mit Hilfe dieses Beschaltungsnetzwerkes werden, synchronisiert auf die Schaltvorgänge der Leistungshalbleiterschalter V₁₁ bis V₁₆, resonante Umschwingvorgänge eingeleitet, die den Leistungshalbeiterschaltern V₁₁ bis V₁₆ und deren antiparallelen Leistungsdioden D₁₁ bis D₁₆ den Strom- und Spannungsverlauf derart aufzwingen, dass diese beim Ein- und Abschalten eine wesentliche Schaltentlastung erfahren. Beim Einschalten der Leistungshalbleiterschalter V₁₁ bis V₁₆ beziehungsweise beim Abschalten der Leistungsdioden D₁₁ bis D₁₆ begrenzt die Strombegrenzungsdrosselspule L_{CL} die Stromanstiegsgeschwindigkeit und übernimmt transient die Zwischenkreisspannung, was dazu führt, dass die Leistungshalbleiter mit definierter Stromänderungsgeschwindigkeit und nahezu ohne Spannung, das heißt verlustleistungsarm ein- beziehungsweise abschalten können. Beim Abschalten der Leistungshalbleiterschalter wird durch einen resonanten Umschwingvorgang der abzuschaltende Strom reduziert und die Schaltspannung zu Beginn des Ausschaltvorganges auf Null reduziert. Die während des Ausschaltvorganges eintretende Spannungsanstiegsgeschwindigkeit wird durch den Resonanzkondensator C_{RES}, die Abschaltüberspannung durch die parallel wirkenden Resonanz- und Abschaltentlastungskondensatoren begrenzt.

Weiterhin ist aus der DE 196 36 248 C1 ein Verfahren zur Schaltentlastung von Bipolartransistoren mit isoliert angeordneten Steuerelektroden beziehungsweise IGBTs bekannt. Das Schaltentlastungsnetzwerk gemäß dieser Druckschrift ist in Fig. 16 dargestellt. Dieses Verfahren ist eine Weiterbildung des vorstehend beschriebenen Verfahrens, bei dem erreicht werden soll, dass es durch das Schaltentlastungsnetzwerk mit minimalen prinzipbedingten Verlustleistungen arbeitet und einen möglichst geringen Aufwand an Bauelementen sowie an Steuer- und Regelaufwand erfordert. Erreicht wird dies durch das Weglassen des in DE 42 33 573 C2 vorhandenen Resonanzkondensators C_{RES} mit dessen Steuerhalbleiter V_{RES} und der Diode D_{RES} und durch geeignetes Betreiben von Strombegrenzungsdrosselspule L_{CL}, Abschaltentlastungskondensator C_{CL} mit Steuerhalbleiter V_{CL} und dessen antiparallele Diode D_{CL}. Dazu bleibt der Steuerhalbleiter V_{CL} während der Abschaltvorgänge der Leistungshalbleiterschalter V₁₁ bis V₁₆, mit niedrigem Strom abgeschaltet. Die zu ihm antiparallele Diode D_{CL} leitet die jeweils in der Strombegrenzungsdrosselspule L_{CL} gespeicherte Energie in den Abschaltentlastungskondensator C_{CL}, der damit etwas über das Zwischenkreisspannungsniveau aufgeladen wird. Jeweils zum Abschalten der Leistungshalbleiterschalter V₁₁ bis V₁₆, mit hohem Laststrom, wird, getrieben durch diese Überladung und dem Einschalten des Steuerhalbleiters V_{CL} ein Resonanzkreisstrom aufgebaut, der die Stromamplitude in der Strombegrenzungsdrosselspule L_{CL} reduziert. Der vorgebbare Wert des Stroms, bis zu dem der Steuerhalbleiter V_{CL} in leitendem Zustand bleibt, wird in Abhängigkeit von einer ausgeglichenen Energiebilanz des Abschaltentlastungskondensators C_{CL}, während eines vollen Schaltzyklus der Leistungshalbleiterschalter V₁₁ bis V₁₆ vorgegeben; bevorzugterweise wird die Hälfte des durch den Leistungshalbleiterschalter V₁₁ bis V₁₆ zur Last fließenden Stromes gewählt. Sobald diese Stromamplitude erreicht ist wird der betreffende Leistungshalbleiterschalter V₁₁ bis V₁₆ in den sperrenden Zustand gesteuert, wodurch der Laststrom, getrieben durch die gespeicherte Energie in der Strombegrenzungsdrosselspule L_{CL} über die Diode D_{CL} in den Abschaltentlastungskondensator C_{CL} gelenkt wird und nebenbei den Steuerhalbleiterschalter V_{CL} nahezu verlustarm abkommutiert. Beim Einschalten eines Leistungshalbleiterschalters V₁₁ bis V₁₆ bleibt der Steuerhalbleiterschalter V_{CL} abgeschaltet, womit gewährleistet ist, dass die Strombegrenzungsdrosselspule L_{CL} die Stromanstiegsgeschwindigkeit begrenzt. Durch dieses vorstehend beschriebene Schaltentlastungsnetzwerk wird somit beim Einschalten der Leistungshalbleiterschalter die Stromanstiegsgeschwindigkeit mit Hilfe der Strombegrenzungsdrosselspule L_{CL} begrenzt und beim Abschalten der Leistungshalbleiterschalter der Abschaltstrom reduziert und die Abschaltüberspannung durch den Abschaltentlastungskondensator C_{CL} begrenzt.

Jedoch besteht bei dieser herkömmlichen Schaltung das Problem, dass die Ansteuerung des Steuerhalbleiterschalters V_{CL} mit derjenigen der Leistungshalbleiterschalter V₁₁ bis V₁₆ koordiniert sein muss. Dies erfordert eine Zusatz-Leitelektronik, die nur mit relativ hohem Aufwand in die vorhandene Leitelektronik integrierbar ist.

Aus der DE 197 30 038 C1 ist schließlich eine im Prinzip theoretische Schaltungsvariante gemäss Fig. 17 bekannt, die eine Anordnung zur Rückführung der Beschaltungsenergie bei einer Brückenschaltung zeigt. Bei dieser Schaltung ist die Strombegrenzungsdrosselspule L_{CL} ebenfalls in Reihe und der Abschaltentlastungskondensator C_{CL} ebenfalls parallel zu den Leistungshalbleiterschaltern V₁₁ bis V₁₆ angeordnet. Der Abschaltentlastungskondensator C_{CL} ist ebenfalls über eine in Richtung zum Abschaltentlastungskondensator C_{CL} gepolte Diode D_{CL} vom Zwischenkreis teilentkoppelt. Soweit entspricht diese Schaltung dem Ansatz nach DE 196 36 248 C1 (Fig. 16), mit der Ausnahme, dass die Rückführung der überschüssigen Energie des Abschaltentlastungskondensators C_{CL} nicht durch den Steuerhalbleiterschalter V_{CL} sondern durch eine ideale Stromquelle I_{Q} direkt zum Zwischenkreiskondensator C_{D} sichergestellt wird. Es ist jedoch nicht angegeben, wie eine derartige ideale Stromquelle I_{Q} praktisch realisiert wird.

Daher ist es die Aufgabe der vorliegenden Erfindung das Schaltentlastungsnetzwerk für Leistungshalbleiterschalter derart weiterzubilden, dass eine Zusatz-Leitelektronik zur Koordination der Ansteuerung eines Steuerhalbleiterschalters V_{CL} mit derjenigen der Leistungshalbleiterschalter eines Hauptstromrichters, die nur mit relativ hohem Aufwand in die vorhandene Leitelektronik integrierbar ist, nicht mehr erforderlich ist.

Diese Aufgabe wird durch die in Patentanspruch 1 angegebenen Merkmale gelöst. In den Unteransprüchen sind vorteilhafte Weiterbildungen der Erfindung angegeben.

Gegenüber dem bekannten Stand der Technik zeichnet sich die erfindungsgemäße Schaltentlastung für Leistungshalbleiterschalter durch folgende Eigenschaften aus:
1) Die Ansteuerung der Halbleiterschalter des Beschaltungsnetzwerkes ist unabhängig von der Ansteuerung der Leistungshalbleiterschalter des Hauptstromrichters und erfolgt im Resonanzbetrieb.
2) Die nominelle Betriebsüberspannung am Abschaltentlastungskondensator C_{CL} kann sehr klein gehalten werden, beispielsweise kleiner 100V, bei 3000V Zwischenkreisspannung.
3) Der Schaltungsaufwand ist niedrig, weil die Halbleiterschalter und Dioden des Beschaltungsnetzwerkes nur mit kleinen Beschaltungsströmen, nicht mit den hohen Lastströmen beansprucht werden.
4) Die Halbleiterschalter des Beschaltungsnetzwerkes werden selbst mit Soft-Turn-On bzw. Einschaltentlastung und mit Soft-Turn-Off bzw. Abschaltentlastung betrieben und arbeiten deshalb verlustleistungsarm.
5) Die Schaltungen können mit vertretbarem Aufwand neben der Soft-Turn-On bzw. Einschaltentlastung auch für Soft-Turn-Off bzw. Abschaltentlastung der Leistungshalbleiter, des Hauptstromrichters erweitert werden.

Weitere Aufgaben, Merkmale und Vorteile der vorliegenden Erfindung werden aus der nachstehenden Beschreibung bevorzugter Ausführungsbeispiele der Erfindung in Verbindung mit der Zeichnung offensichtlich.

Es zeigen:
Fig. 1 ein erfindungsgemäßes Einschaltentlastungsnetzwerk für Leistungshalbleiterschalter mit einer Rückspeiseschaltung in Reihe zum Abschaltentlastungskondensator C_{CL},
Fig. 2 die Signalverläufe des in Fig. 1 gezeigten erfindungsgemäßen Einschaltentlastungsnetzwerks,
Fig. 3 die Ausschnittsvergrößerung der Signalverläufe aus Fig. 2,
Fig. 4 weitere Signalverläufe des in Fig. 1 gezeigten erfindungsgemäßen Einschaltentlastungsnetzwerks,
Fig. 5 eine Ausschnittsvergrößerung der Signalverläufe aus Fig. 4,
Fig. 6 ein erfindungsgemäßes Einschaltentlastungsnetzwerk für Leistungshalbleiterschalter mit einer Rückspeiseschaltung parallel zum Abschaltentlastungskondensator C_{CL} gemäß einem zweiten Ausführungsbeispiel der Erfindung,
Fig. 7 die Signalverläufe zum in Fig. 6 gezeigten erfindungsgemäßen Einschaltentlastungsnetzwerk,
Fig. 8 eine Ausschnittsvergrößerung der Signalverläufe aus Fig. 7,
Fig. 9 und 10 die Signalverläufe entsprechend Fig. 7 und 8 jedoch im Teillastbetrieb des Haupt-Stromrichters,
Fig. 11 ein Schaltentlastungsnetzwerk für Leistungshalbleiterschalter mit einer Rückspeiseschaltung in Reihe zum Abschaltentlastungskondensator und einer gemeinsamen Strombegrenzungsdrosselspule gemäß einem dritten Ausführungsbeispiel der Erfindung,
Fig. 12 ein Schaltentlastungsnetzwerk für Leistungshalbleiterschalter mit einer Rückspeiseschaltung in Reihe zum Abschaltentlastungskondensator und drei Strombegrenzungsdrosselspulen gemäß einem vierten Ausführungsbeispiel der Erfindung,
Fig. 13 ein Schaltentlastungsnetzwerk für Leistungshalbleiterschalter mit einer Rückspeiseschaltung parallel zum Abschaltentlastungskondensator und einer gemeinsamen Strombegrenzungsdrosselspule gemäß einem fünften Ausführungsbeispiel der Erfindung,
Fig.14 ein Schaltentlastungsnetzwerk für Leistungshalbleiterschalter mit einer Rückspeiseschaltung parallel zum Abschaltentlastungskondensator und drei Strombegrenzungsdrosselspulen gemäß einem sechsten Ausführungsbeispiel der Erfindung,
Fig. 15 ein Schaltentlastungsnetzwerk für IGBTs gemäß der DE 42 33 573 C2 und
Fig. 16 ein Schaltentlastungsnetzwerk für IGBTs gemäß der DE 196 36 248 C1,
Fig. 17 ein Schaltentlastungsnetzwerk für IGBT mit einer Stromquelle gemäß der DE 197 30 038 C1.

In den Figuren werden für gleiche Elemente gleiche Bezugszeichen verwendet.

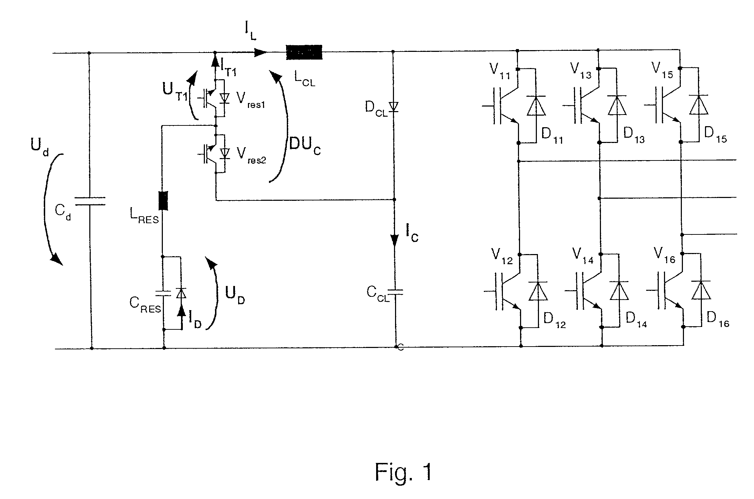

Fig. 1 zeigt ein Einschaltentlastungsnetzwerk für Leistungshalbleiterschalter mit einem seriell zum Abschaltentlastungskondensator C_{CL} angeordneten Schwingkreisstromrichter, zur Rückspeisung der überschüssigen Energie des Abschaltentlastungskondensators C_{CL}. Bei diesem erfindungsgemäßen Ausführungsbeipiel des Schaltentlastungsnetzwerks für Leistungshalbleiterschalter wird der Schwingkreisstromrichter unabhängig von den Leistungshalbleiterschaltern V₁₁ bis V₁₆ des Hauptstromrichters angesteuert.

In diesem erfindungsgemäßen Schaltentlastungsnetzwerk sind, ebenso wie im Stand der Technik, die Leistungshalbleiterschalter V₁₁ bis V₁₆ zusammen mit ihren antiparallelen Rückarbeitsdioden D₁₁ bis D₁₆ als Bestandteil einer Brückenschaltung zwischen einem ersten Pol einer Gleichspannungsquelle, dem Anschluss einer Last, die in Fig. 1 nicht dargestellt ist und einem zweiten Pol der Gleichspannungsquelle verschaltet. Parallel zu dieser Brückenschaltung ist eine Reihenschaltung aus einem Abschaltentlastungskondensator C_{CL} und einer in Richtung des Abschaltentlastungskondensators C_{CL} gepolten Clamp-Diode D_{CL} verschaltet. Außerdem ist eine Strombegrenzungsdrosselspule L_{CL} in der Zuleitung des ersten Poles der Gleichspannungsquelle zur Brückenschaltung ausgebildet. Die Strombegrenzungsdrosselspule kann optional auch in zwei Strombegrenzungsdrosselspulen aufgeteilt werden, wobei die zweite Strombegrenzungsdrosselspule in der Zuleitung des zweiten Poles der Gleichspannungsquelle zur Brückenschaltung angeordnet ist, zwischen den Anschlüssen des Resonanzkondensators C_{RES} (Beschreibung siehe unten) und des Abschaltentlastungskondensators C_{CL}.

Zusätzlich ist erfindungsgemäß ein Schwingkreisstromrichter in Reihe mit dem Abschaltentlastungskondensator C_{CL} ausgebildet. Dieser Schwingkreisstromrichter umfasst zwei seriell verbundene Halbleiterschalter Vᵣₑₛ₁, Vᵣₑₛ₂, die vom Verbindungspunkt zwischen Clamp-Diode D_{CL} und Abschaltentlastungskondensator C_{CL} ausgehend mit dem ersten Pol der Gleichspannungsquelle, vor der Strombegrenzungsdrossel L_{CL}, verbunden sind und jeweils eine antiparallele Rückarbeitsdiode Dᵣₑₛ₁, Dᵣₑₛ₂ besitzen, sowie einen Reihenschwingkreis aus einem Resonanzkondensator C_{RES} und einer Resonanzdrosselspule L_{RES}, wobei eine in Richtung der Resonanzdrosselspule L_{RES} gepolte Resonanzdiode D_{R} parallel zum Resonanzkondensator C_{RES} geschaltet ist. Dieser Reihenschwingkreis ist zwischen einem Verbindungspunkt zwischen dem ersten und zweiten Halbleiterschalter Vᵣₑₛ₁, Vᵣₑₛ₂ und dem zweiten Pol der Gleichspannungsquelle angeordnet. Die Resonanzdiode D_{R} sowie der Resonanzkondensator C_{RES} können in Stromrichtern mit hoher Zwischenkreisspannung auch als Serienschaltung zweier Resonanzdioden beziehungsweise Resonanzkondensatoren ausgeführt werden.

Durch die Anordnung der Halbleiterschalter Vᵣₑₛ₁, Vᵣₑₛ₂, des Schwingkreisstromrichters zwischen dem ersten Pol der Gleichspannungsquelle und dem Abschaltentlastungskondensator C_{CL}, werden diese nur mit der Spannungsdifferenz DU_{C}, d.h. etwa 100 V beansprucht. Demzufolge ist eine entsprechende, kostengünstige Auswahl der Halbleiterschalter Vᵣₑₛ₁, Vᵣₑₛ₂ möglich, beispielsweise die Verwendung von 600V-IGBTs bei einer 3000V Gleichspannungsquelle.

Auf diese Weise wird eine zuverlässige Einschaltentlastung der Leistungshalbleiter erreicht, die losgelöst von der Leitelektronik der Leistungshalbleiter funktioniert. Die in den Beschaltungskomponenten gespeicherte, überschüssige Energie wird in den Zwischenkreis zurückgespiesen und steht dort wieder zur Verfügung, wodurch die Gesamtverlustleistung des Stromrichters reduziert und der Wirkungsgrad erhöht wird. Durch die Strombegrenzungsdrossel L_{CL} wird im Kurzschlussfall der maximal auftretende Kurzschlussstrom begrenzt, so dass sich zusätzliche Komponenten zur Begrenzung des Kurzschlussstromes erübrigen.

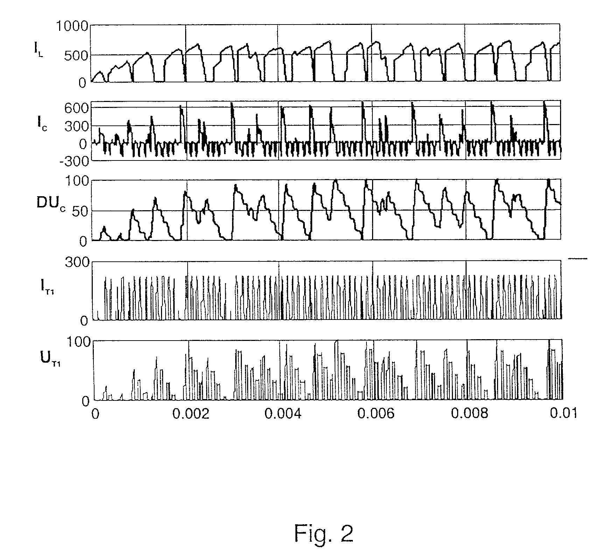

In Fig. 2 sind Signalverläufe im Schaltentlastungsnetzwerk für Leistungshalbleiterschalter gemäß Fig. 1, bei einer Zwischenkreisspannung U_{D} von 2800V, einem Abschaltentlastungskondensator C_{CL} mit einer Kapazität von 400 µF und einer Strombegrenzungsdrosselspule L_{CL} mit einer Induktivität von 10 µH gezeigt. Das Steuerverfahren für den Hauptstromrichter mit den Leistungshalbleiterschaltern V₁₁ bis V₁₆ ist die Dreieck-Modulation mit einer Dreieck-Frequenz f_{SW} von 900 Hz und einer Aussteuerung mod von 0,8. Die Last besteht aus einer Lastinduktivität L_{Last} von 5 mH und einem Lastwiderstand R_{Last} von 5 Ω. Der Schwingkreisstromrichter wird mit einem Rechtecksignal angesteuert mit einer Schaltfrequenz f_{RES} von 8 kHz, einer Aussteuerung mod_{RES} von 0,5, einer Schwingkreisinduktivität L_{RES} von 250 µH und einer Schwingkreiskapazität C_{RES} von 1,5 µF. In der Zeichnung ist der Strom in der Strombegrenzungsdrossel L_{CL} mit I_{L}, der Strom im Abschaltentlastungskondensator C_{CL} mit I_{C}, die Spannungsdifferenz über den Schwingkreisstromrichter mit DU_{C}, der Strom in dem ersten Halbleiterschalter Vᵣₑₛ₁ des Schwingkreisstromrichters mit I_{T1} und die Spannung an dem ersten Halbleiterschalter Vᵣₑₛ₁ des Schwingkreisstromrichters mit U_{T1} bezeichnet.

Dabei ist aus Fig. 2 unter anderem ersichtlich, dass die Spannungsdifferenz DU_{C} zwischen der Spannung U_{C} am Abschaltentlastungskondensator C_{CL} und der Zwischenkreisspannung U_{d} bei einem Laststrom I_{L} von ungefähr 500 A (siehe erster Signalverlauf) unter 100 V bleibt.

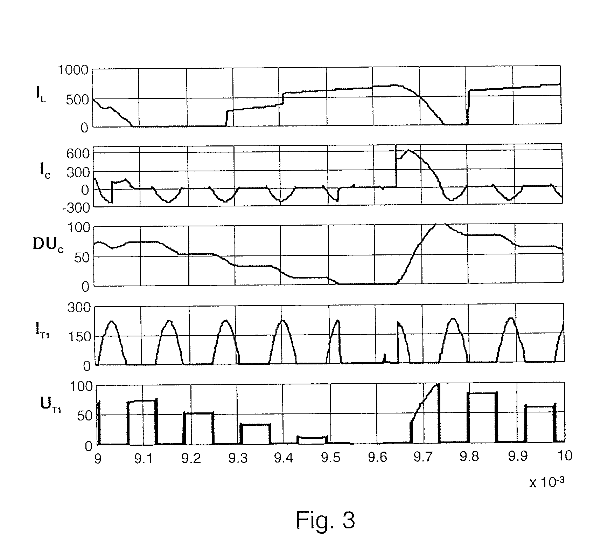

Die Beanspruchungen der Komponenten des Schwingkreisstromrichters sind in den gedehnt dargestellten Signalverläufen aus Fig. 2 in Fig. 3 veranschaulicht. Die Halbleiterschalter Vᵣₑₛ₁, Vᵣₑₛ₂ des Schwingkreisstromrichters werden nur mit der Spannungsdifferenz DU_{C} beansprucht, die aus Fig. 2 und 3 ersichtlich unter 100V bleibt. Sie arbeiten beim Ein- und Abschalten unter Zero-Current-Switching(ZCS)- bzw. Nullstrom-Schalt-Bedingungen.

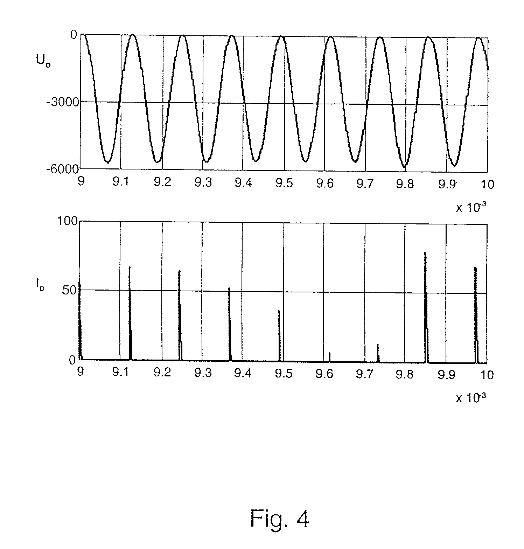

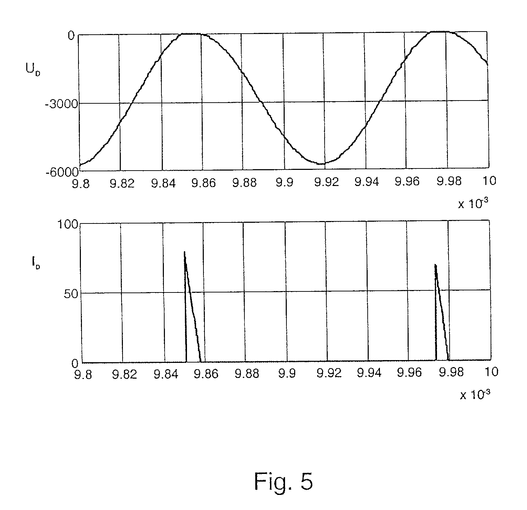

Die Beanspruchungen der Resonanzdiode D_{R} aus Fig. 1 sind in den Fig. 4 und 5 dargestellt, wobei Fig. 5 eine gedehnte Darstellung der Signalverläufe gemäss Fig. 4 ist. Aus diesen Signalverläufen lässt sich ersehen, dass die an der Resonanzdiode D_{R} anliegende Spannung U_{D} einen sinusförmigen Signalverlauf zeigt und die Resonanzdiode D_{R} jeweils nur kurz stromleitend I_{D} wird, wobei sie als Freilaufdiode für den Resonanzkondensator Cᵣₑₛ wirkt und verhindert, dass dieser negativ aufgeladen wird. Aufgrund des gezeigten sehr langsamen Ansteigens der Abschaltspannung zeigt die Resonanzdiode D_{R} ein weiches Abschaltverhalten und wird damit nur gering beansprucht.

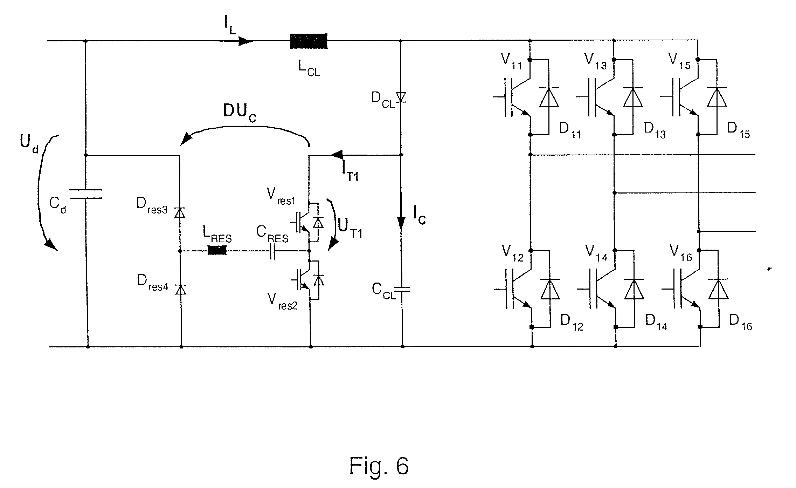

Fig. 6 zeigt ein weiteres Ausführungsbeispiel der vorliegenden Erfindung, nämlich ein Einschaltentlastungsnetzwerk für Leistungshalbleiterschalter mit einem parallel zum Abschaltentlastungskondensator C_{CL} angeordneten Schwingkreisstromrichter, zur Rückspeisung der überschüssigen Energie des Abschaltentlastungskondensators C_{CL}. Im Gegensatz zum Stand der Technik gemäss der DE 196 36 248 C1 wird diese Schaltung ebenso wie das vorstehend unter Bezugnahme auf die Fig. 1 bis 5 beschriebene erste Ausführungsbeispiel der Erfindung unabhängig von der Ansteuerung des Hauptstromrichters V₁₁ bis V₁₆ angesteuert.

In diesem in Fig. 6 dargestellten, erfindungsgemäßen Schaltentlastungsnetzwerk sind, ebenso wie im Stand der Technik, die Leistungshalbleiterschalter V₁₁ bis V₁₆ zusammen mit ihren antiparallelen Rückarbeitsdioden D₁₁ bis D₁₆ als Bestandteil einer Brückenschaltung zwischen einem ersten Pol einer Gleichspannungsquelle, dem Anschluss einer Last, die in Fig. 6 nicht dargestellt ist und einem zweiten Pol der Gleichspannungsquelle verschaltet. Parallel zu dieser Brückenschaltung ist eine Reihenschaltung aus einem Abschaltentlastungskondensator C_{CL} und einer in Richtung des Abschaltentlastungskondensators C_{CL} gepolten Clamp-Diode D_{CL} verschaltet. Außerdem ist eine Strombegrenzungsdrosselspule L_{CL} in der Zuleitung des ersten Poles der Gleichspannungsquelle zur Brückenschaltung ausgebildet. Weiterhin ist parallel zum Abschaltentlastungskondensator C_{CL} ein Schwingkreisstromrichter angeordnet,
der zwei seriell verbundene Halbleiterschalter Vᵣₑₛ₁, Vᵣₑₛ₂ umfasst, die vom Verbindungspunkt zwischen Clamp-Diode D_{CL} und Abschaltentlastungskondensator C_{CL} ausgehend mit dem zweiten Pol der Gleichspannungsquelle verbunden sind und jeweils eine antiparallele Rückarbeitsdiode Dᵣₑₛ₁, Dᵣₑₛ₂ besitzen, sowie einen Reihenschwingkreis aus einem Resonanzkondensator C_{RES} und einer Resonanzdrosselspule L_{RES} und der Reihenschaltung zweier Resonanzdioden Dᵣₑₛ₃, Dᵣₑₛ₄, die vom zweiten Pol der Gleichspannungsquelle ausgehend in Richtung des ersten Poles der Gleichspannungsquelle gepolt und vor der Strombegrenzungsdrosselspule L_{CL} angeschlossen sind. Der Reihenschwingkreis L_{RES}, C_{RES} ist mit dem Verbindungspunkt der zwei Halbleiterschalter Vᵣₑₛ₁, Vᵣₑₛ₂ und dem Verbindungspunkt der Resonanzdioden Dᵣₑₛ₃, Dᵣₑₛ₄ verbunden.

Mittels des Schaltentlastungsnetzwerkes gemäß Fig. 6, welches einfach und ohne großen Aufwand hergestellt werden kann, wird ebenso wie mit dem Schaltentlastungsnetzwerk für Leistungshalbleiterschalter gemäß Fig. 1 eine zuverlässige Einschaltentlastung erreicht, die losgelöst von der Leitelektronik der Leistungshalbleiter funktioniert. Ebenso wie bei der Schaltentlastung gemäß Fig. 1 wird auch bei der Schaltentlastung gemäß Fig. 6 die in den Beschaltungskomponenten gespeicherte, überschüssige Energie in den Zwischenkreis zurückgespiesen und steht dort wieder zur Verfügung, wodurch die Gesamtverlustleistung des Stromrichters reduziert und der Wirkungsgrad erhöht wird. Auch wird der maximal auftretende Kurzschlussstrom durch die Strombegrenzungsdrosselspule im Kurzschlussfall begrenzt, so dass keine zusätzlichen strombegrenzenden Komponenten benötigt werden. Ein Vorteil dieses Schaltentlastungsnetzwerks gemäß Fig. 6 gegenüber desjenigen gemäß Fig. 1 ist, dass die dort auftretende hohe Spannung an der Resonanzdiode D_{R} und am Resonanzkondensator C_{RES}, in der Regel die doppelte Gleichspannungsquellenspannung 2 x U_{d}, nicht auftritt. Der Nachteil des Schaltentlastungsnetzwerks gemäß Fig. 6 gegenüber desjenigen gemäß Fig. 1 ist, dass die Halbleiterschalter Vᵣₑₛ₁, Vᵣₑₛ₂ mit der vollen Gleichspannungsquellenspannung U_{d} beansprucht werden, weil diese zum Abschaltentlastungskondensator C_{CL} parallel geschaltet sind.

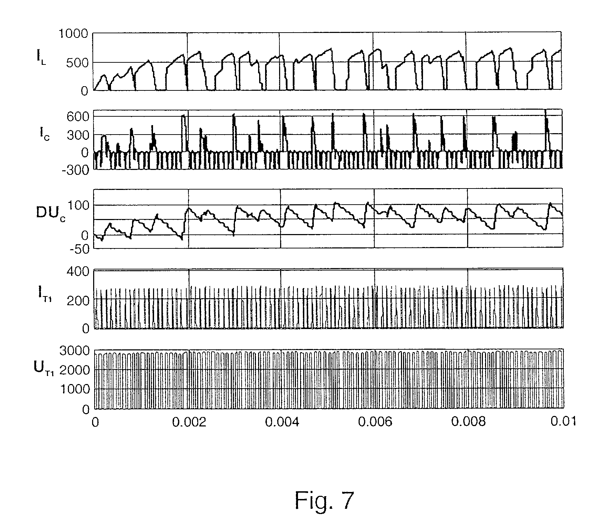

In Fig. 7 sind Signalverläufe in der Schaltentlastungsschaltung für Leistungshalbleiterschalter gemäß Fig. 6 bei einer Zwischenkreisspannung U_{d} von 2800V, einem Clamp-Kondensator C_{CL} mit einer Kapazität von 400 µF und einer Strombegrenzungsinduktivität L_{CL} von 10 µH gezeigt. Das Steuerverfahren für den Haupt-Stromrichter mit den Leistungshalbleiterschaltern V₁₁ bis V₁₆ ist eine Dreieck-Modulation mit einer Dreieck-Frequenz f_{SW} von 900 Hz, einer Aussteuerung mod von 0,8, einer Last-Induktivität L_{Last} von 5 mH und einem Lastwiderstand R_{Last} von 5 Ω. Der Schwingkreisstromrichter wird mit einem Rechtecksignal angesteuert mit einer Schaltfrequenz f_{RES} von 10 kHz, einer Aussteuerung mod_{RES} von 0,5, einer Schwingkreisinduktivität L_{RES} von 100 µH und einer Schwingkreiskapazität C_{RES} von 1 µF. In Fig. 7 ist der Strom in der Strombegrenzungsinduktivität L_{CL} mit I_{L}, der Strom im Abschaltentlastungskondensator C_{CL} mit I_{C}, die Spannungsdifferenz über den Schwingkreisstromrichter DU_{C}, der Strom im ersten Halbleiterschalter Vᵣₑₛ₁ des Schwingkreisstromrichters mit I_{T1} und die Spannung an dem Halbleiterschalter Vᵣₑₛ₁ des Schwingkreisstromrichters mit U_{T1} bezeichnet.

Aus Fig. 7 ist ersichtlich, dass ebenso wie beim ersten Ausführungsbeispiel auch bei dem Schaltentlastungsnetzwerk für Leistungshalbleiter gemäß Fig. 6 die Spannungsdifferenz DU_{C} zwischen der Spannung U_{C} am Abschaltentlastungskondensator C_{CL} und der Gleichspannungsquellenspannung U_{d} bei einem Laststrom I_{L} von ungefähr 500 A (siehe erster Signalverlauf) unter 100 V geblieben ist. Dies ist deshalb von großem Vorteil, weil diese Spannungsdifferenz DU_{C} den Leistungshalbleitern V₁₁ bis V₁₆ bei den Abschaltvorgängen überlagert wird.

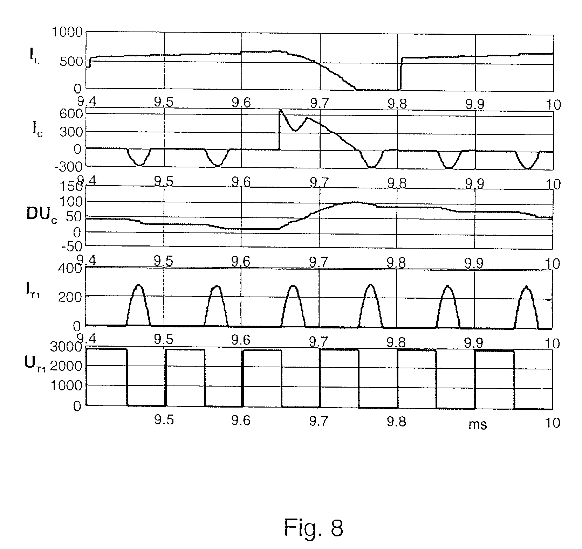

Die Beanspruchungen der Komponenten des Schwingkreisstromrichters gemäß Fig. 6 sind in gegenüber den Signalverläufen aus Fig. 7 ausgedehnten Signalverläufen in Fig. 8 gezeigt. Die Schaltfrequenz f_{RES} des Schwingkreisstromrichters ist kleiner als die Resonanzfrequenz des Schwingkreises L_{CL}, C_{CL} gewählt. Dadurch arbeiten die Halbleiterschalter Vᵣₑₛ₁, Vᵣₑₛ₂ des Schwingkreisstromrichters beim Ein- und Abschalten unter Zero-Current-Switching bzw. Nullstrom-Schalten, wodurch deren Schaltverluste drastisch reduziert werden.

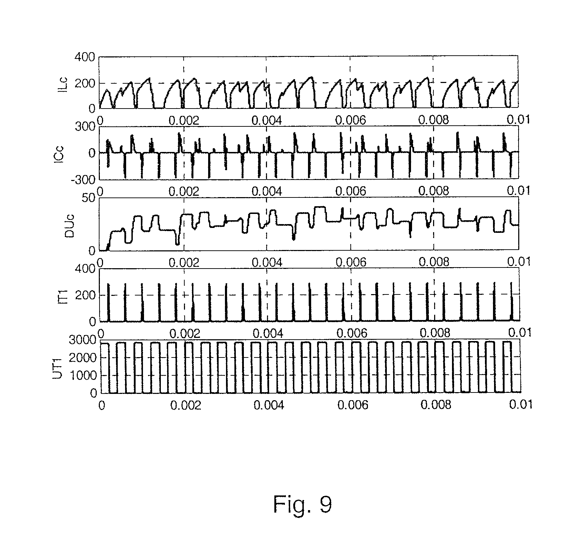

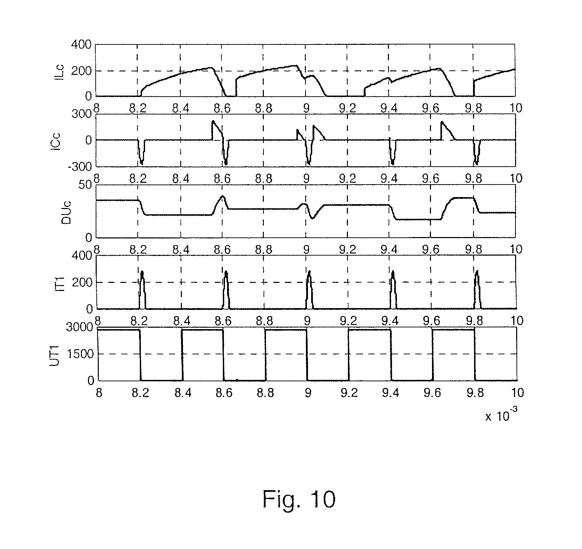

Um die Schaltverluste des Schwingkreisstromrichters im Teillastbetrieb zu reduzieren, kann seine Schaltfrequenz f_{RES} in Abhängigkeit von der Belastung der Leistungshalbleiterschalter V₁₁ bis V₁₆ des Hauptstromrichters reduziert werden. Fig. 9 und 10 zeigen die gleichen Verläufe wie Fig. 7 und 8, allerdings im Teillastbetrieb des Hauptstromrichters (500/4 A). Die Schaltfrequenz f_{RES} des Schwingkreisstromrichters wurde entsprechend reduziert (10/4 kHz). In diesem Teillastbetrieb beträgt der Laststrom I_{L} ungefähr 200 A. Die Spannungsdifferenz DU_{C} zwischen der Spannung U_{C} am Clamp-Kondensator C_{CL} und der Zwischenkreisspannung U_{d} bleibt bei diesem Laststromwert unter 50 V, d.h. halbiert sich gegenüber dem vorhergehend diskutierten Volllastbetrieb.

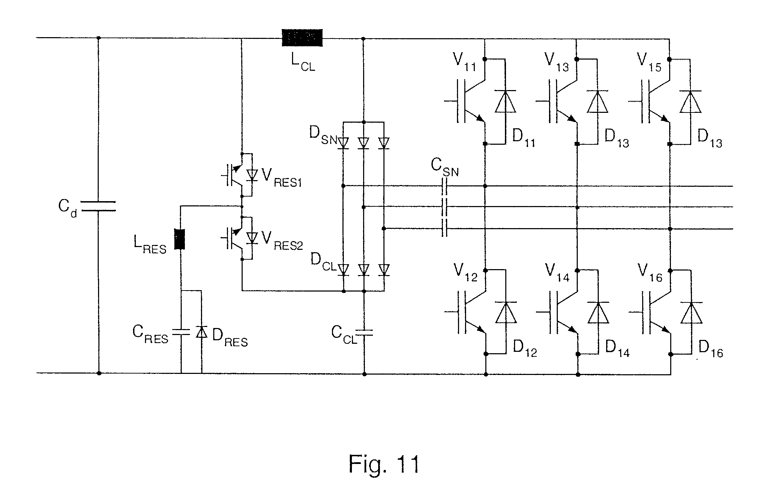

Eine Weiterbildung des erfindungsgemäßen Schaltentlastungsnetzwerks gemäß Fig. 1 ist in Fig. 11 gezeigt. In diesem Ausführungsbeispiel des erfindungsgemäßen Schaltentlastungsnetzwerks wird nun die Clamp-Diode D_{CL}, die in Reihe mit dem Abschaltentlastungskondensator C_{CL} verschaltet war, durch drei parallel geschaltete Reihenschaltungen jeweils bestehend aus einer Clamp-Diode D_{CL} und einer Snubber-Diode D_{SN} ersetzt. Hierbei sind die Dioden D_{CL} und D_{SN} in Richtung des Abschaltentlastungskondensators C_{CL} gepolt. Darüber hinaus ist der Verbindungspunkt zwischen jeder Clamp-Diode D_{CL} und jeder Snubber-Diode D_{SN} jeweils über einen Snubber-Kondensator C_{SN} mit jeweils einem Verbindungspunkt zwischen zwei in Reihe geschalteten Leistungshalbleiterschaltern V₁₁ und V₁₂, V₁₃ und V₁₄ bzw. V₁₅ und V₁₆ und dem jeweiligen Anschluss der Last verbunden.

Durch diese Modifikation des erfindungsgemäßen Schaltentlastungsnetzwerks für Leistungshalbleiterschalter gemäß Fig. 1 wird somit auf einfache Weise sowohl eine zuverlässige Einschalt- als auch eine Abschaltentlastung erreicht, die losgelöst von der Leitelektronik der Leistungshalbleiter funktioniert. Die Leistungshalbleiter des Hauptstromrichters werden bei den Schaltvorgängen wesentlich entlastet, wodurch sich die Schaltverlustleistungen reduzieren und die Leistungshalbleiter von den Herstellern in Richtung höhere Stromtragfähigkeit optimiert werden können. Die in die Beschaltungselemente verlagerte Energie wird in den Zwischenkreis zurückgespeist, wodurch sich der Stromrichterwirkungsgrad verbessert.

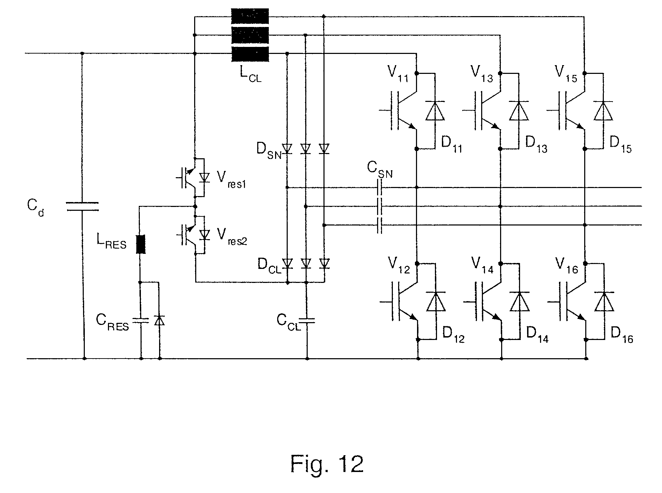

Fig. 12 wiederum zeigt eine Weiterbildung der erfindungsgemäßen Schaltung gemäß Fig. 11. In diesem Fall wird nun zusätzlich die Strombegrenzungsdrosselspule L_{CL} durch drei separate, parallel geschaltete Strombegrenzungsdrosselspulen ersetzt. Hierbei ist jeder Verbindungspunkt zwischen einer Strombegrenzungsdrosselspule L_{CL} und einer zugehörigen Reihenschaltung aus zwei Leistungshalbleiterschaltern V₁₁ und V₁₂, V₁₃ und V₁₄ bzw. V₁₅ und V₁₆ mit jeweils einer der Reihenschaltungen aus der Snubber-Diode D_{SN} und der Clamp-Diode D_{CL} verbunden.

Auf diese Weise kann ebenso wie mit dem Schaltentlastungsschaltung für Leistungshalbleiterschalter gemäß Fig. 11 eine alternative, zuverlässige, einfache Einschalt- und Abschaltentlastung erreicht werden. Durch die Aufteilung der Strombegrenzungsdrosselspule in drei einzelne Spulen, werden diese mit beispielsweise Faktor drei kleineren Strömen beansprucht, wodurch sich die Verlustleistungen pro Spule reduzieren und die Kühlung der Spulen vereinfacht wird. Ein weiterer Vorteil ist die erreichte Entkopplung zwischen den Schaltentlastungsnetzwerken der einzelnen Phasen des Hauptstromrichters. Dadurch wird verhindert, dass durch alle Schaltvorgänge innerhalb des Hauptstromrichters jeweils alle Snubber- und Clampdioden beansprucht werden. Beispielsweise war es für die Beanspruchung der Snubber- und Clampdioden kritisch, wenn sie aufgrund eines Abschaltvorganges eines beliebigen Leistungshalbleiterschalters z.B. V₁₁ Strom geleitet haben und durch den unmittelbar daraufhin folgenden Einschaltvorgang eines oder sogar zweier weiteren Leistungshalbleiterschalter z.B. V₁₃, V₁₅ wieder hart abkommutiert wurden.

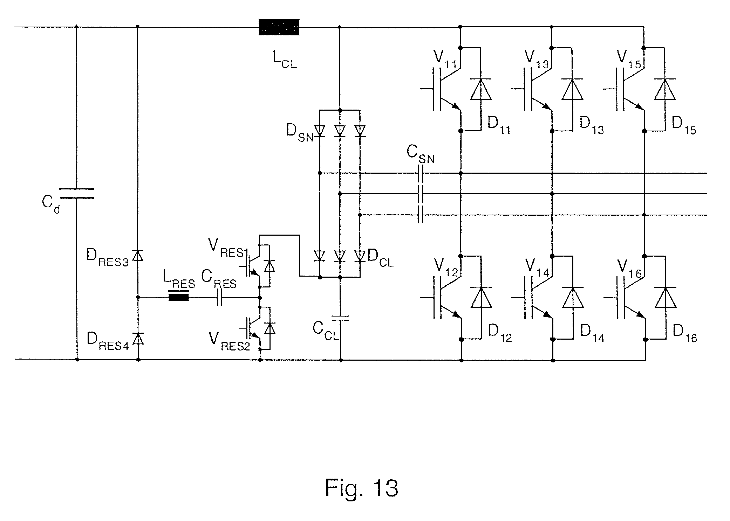

Eine entsprechende Weiterbildung der erfindungsgemäßen Ausführungsform gemäss Fig. 6 ist in Fig. 13 gezeigt. In diesem Ausführungsbeispiel des erfindungsgemäßen Schaltentlastungsnetzwerkes wird nun die Clamp-Diode D_{CL}, die in Reihe mit dem Abschaltentlastungskondensator C_{CL} verschaltet war, durch drei parallel geschaltete Reihenschaltungen jeweils bestehend aus einer Clamp-Diode D_{CL} und einer Snubber-Diode D_{SN} ersetzt. Hierbei sind die Dioden D_{CL} und D_{SN} in Richtung des Abschaltentlastungskondensators C_{CL} gepolt. Darüber hinaus ist der Verbindungspunkt zwischen jeder Clamp-Diode D_{CL} und jeder Snubber-Diode D_{SN} jeweils über einen Snubber-Kondensator C_{SN} mit jeweils einem Verbindungspunkt zwischen zwei in Reihe geschalteten Leistungshalbleiterschaltern und dem jeweiligen Lastanschluss verbunden.

Durch diese Modifikation des erfindungsgemäßen Schaltentlastungsnetzweks für Leistungshalbleiterschalter gemäß Fig. 13 wird ebenso wie mit der Modifikation gemäß Fig. 11 bzw. 12 eine zuverlässige, einfache Einschalt- und Abschaltentlastung erreicht, die losgelöst von der Leitelektronik der Leistungshalbleiter des Hauptstromrichters funktioniert. Die Leistungshalbleiter des Hauptstromrichters werden auch hier bei den Schaltvorgängen wesentlich entlastet, wodurch sich die Schaltverlustleistungen reduzieren und die Leistungshalbleiter von den Herstellern in Richtung höhere Stromtragfähigkeit optimiert werden können. Die in die Beschaltungselemente verlagerte Energie wird in den Zwischenkreis zurückgespeist, wodurch sich der Stromrichterwirkungsgrad verbessert.

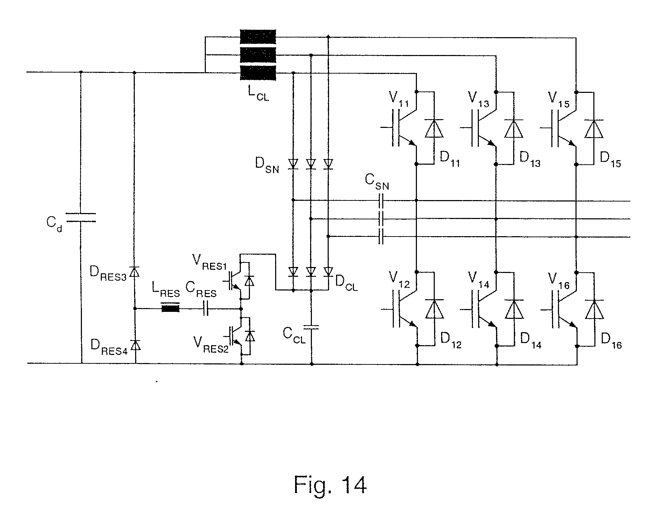

Fig. 14 zeigt wiederum eine Weiterbildung der erfindungsgemäßen Schaltung gemäß Fig. 13. In diesem Fall wird nun zusätzlich die Strombegrenzungsdrosselspule L_{CL} in drei separate, parallel geschaltete Strombegrenzungsdrosselspulen aufgeteilt. Jeder Verbindungspunkt zwischen einer Strombegrenzungsdrosselspule L_{CL} und einer zugehörigen Reihenschaltung aus zwei Leistungshalbleiterschaltern V₁₁ und V₁₂, V₁₃ und V₁₄, V₁₅ und V₁₆ ist dann mit jeweils einer der Reihenschaltungen aus der Clamp-Diode D_{CL} und einer Snubber-Diode D_{SN} verbunden.

Auf diese Weise bietet auch die Schaltungsvariante gemäß Fig. 14 ebenso wie die Schaltungsvariante gemäss Fig. 11, 12 oder 13 eine zuverlässige und einfache Einschalt- und Abschaltentlastung. Durch die Aufteilung der Strombegrenzungsdrosselspule in drei einzelne Spulen, werden diese, wie schon beim Entlastungsnetzwerk nach Fig. 12 beschrieben, mit beispielsweise Faktor drei kleineren Strömen beansprucht, wodurch die Verlustleistung pro Spule reduziert und die Kühlung der Spulen vereinfacht wird. Ein weiterer Vorteil ist die erreichte Entkopplung zwischen den Schaltentlastungsnetzwerken der einzelnen Phasen des Hauptstromrichters. Dadurch wird verhindert, dass durch alle Schaltvorgänge innerhalb des Hauptstromrichters jeweils alle Snubber- und Clampdioden beansprucht werden. Beispielsweise war es für die Beanspruchung der Snubber- und Clampdioden kritisch, wenn sie aufgrund eines Abschaltvorganges eines beliebigen Leistungshalbleiterschalters z.B. V₁₁ Strom geleitet haben und durch den unmittelbar daraufhin folgenden Einschaltvorgang eines oder sogar zweier weiteren Leistungshalbleiterschalter zusammen z.B. V₁₃, V₁₅ wieder hart abkommutiert wurden.

Zusammenfassend lässt sich sagen, dass verschiedene Ausführungsbeispiele für Schaltentlastungsnetzwerke für Leistungshalbleiterschalter beschrieben wurden, bei denen ein Schwingkreisstromrichter entweder in Reihe oder parallel zu einem Abschaltentlastungskondensator angeordnet ist, zur Rückführung der Energie aus den Beschaltungskomponenten dient und unabhängig von den Leistungshalbleiterschaltern ansteuerbar ist. Die offenbarten Schaltungsvarianten weisen alle zumindest die folgenden Eigenschaften auf:
- Die Ansteuerung der Halbleiterschalter des Schwingkreisstromrichters ist unabhängig von der Leistungshalbleiterschalter des Hauptstromrichters realisierbar.
- Die nominelle Betriebsüberspannung des Abschaltentlastungskondensators kann sehr klein gehalten werden, beispielsweise unter 100 V, bei 3000V Gleichspannungsquellenspannung.
- Der Schaltungsaufwand ist verglichen mit herkömmlichen Schaltungen niedrig.
- Die Halbleiterschalter des Schwingkreisstromrichters werden unter Soft-Turn-On bzw. Einschaltentlastung und Soft-Turn-Off bzw. Abschaltentlastung betrieben (Resonanzbetrieb), dadurch werden sowohl Beanspruchungen durch Anstiege di/dt des Durchlassstromes beim Einschalten als auch Anstiege du/dt der Blokkierspannung beim Abschalten und die Abschaltüberspannung zuverlässig vermindert, so dass keine Schäden an den Bauelementen auftreten.
- Die Schaltung kann mit vertretbarem Aufwand für die Einschalt- und Abschaltentlastung der Leistungshalbleiterschalter des Haupt-Stromrichters erweitert werden.

Die Ansteuerungen der erfindungsgemäßen Schaltungsvarianten sind zudem sehr einfach zu realisieren, da sie unabhängig von denen der Leistungshalbleiterschalter des Hauptstromrichters arbeiten.

Die Höhe der nominellen Betriebsüberspannung des Abschaltentlastungskondensators, die unter 100 V liegt, in den erfindungsgemäßen Schaltungsvarianten hängt vorteilhafterweise nicht von dem Rückspeisestromrichter, sondern nur noch von der Höhe des Scheitelwerts des Laststroms sowie der Kapazität des Abschaltentlastungskondensators ab.

Derzeit werden bevorzugt Integrated Bipolartransistoren bzw. Bipolartransistoren mit isoliert angeordneter Gateelektrode bzw. IGBT als Leistungshalbleiterschalter bzw. Halbleiterschalter verwendet. Ebenso ist es für den Fachmann offensichtlich, dass auch Integrated-Gate-Commutated-Thyristoren bzw. IGCT sowie andere Leistungshalbleiterschalter als Leistungshalbleiterschalter bzw. Halbleiterschalter verwendet werden können.

## Patentansprüche

1. Schaltentlastungsnetzwerk für Leistungshalbleiterschalter, mit:
Leistungshalbleiterschaltern (V₁₁ bis V₁₆), die als Bestandteil einer Brückenschaltung zwischen einen ersten Pol einer Gleichspannungsquelle, den Anschlüssen einer Last und einen zweiten Pol der Gleichspannungsquelle, zusammen mit einer jedem Leistungshalbleiterschalter antiparallel geschalteten Rückarbeitsdioden (D₁₁ bis D₁₆) geschaltet sind,
einer Strombegrenzungsdrosselspule (L_{CL}) in der Zuleitung von der Gleichspannungsquelle zu den Leistungshalbleiterschalter (V₁₁ bis V₁₆ ),
einem Abschaltentlastungskondensator (C_{CL}) in Reihe mit einem Schwingkreisstromrichter, wobei der Schwingkreisstromrichter zur Rückführung der überschüssigen Energie des Abschaltentlastungskondensators (C_{CL}) dient und unabhängig von den Leistungshalbleiterschaltern (V₁₁ bis V₁₆) ansteuerbar ist.

2. Schaltentlastungsnetzwerk für Leistungshalbleiterschalter nach Anspruch 1, zusätzlich mit
einer zweiten, optionalen Strombegrenzungsdrosselspule in der Rückleitung zu dem zweiten Pol der Gleichspannungsquelle.

3. Schaltentlastungsnetzwerk für Leistungshalbleiterschalter nach Anspruch 1 oder 2, wobei
der Schwingkreisstromrichter eine in Richtung des Abschaltentlastungskondensators (C_{CL}) gepolte Clamp-Diode (D_{CL}), die mit dem Abschaltentlastungskondensator (C_{CL}) in Reihe geschaltet ist, wobei diese Reihenschaltung diodenseitig mit der Verbindungsstelle der Leistungshalbleiterschalter (V₁₁, V₁₃ und V₁₅) und der Einschaltentlastungsdrosselspule (L_{CL}) und kondensatorseitig mit der Verbindungsstelle der Leistungshalbleiterschalter (V₁₂, V₁₄ und V₁₆) mit der optionalen zweiten Strombegrenzungsdrosselspule oder dem zweiten Pol der Gleichspannungsquelle angeschlossen ist,
in Reihe verbundene erste und zweite Resonanz-Halbleiterschalter (Vᵣₑₛ₁, Vᵣₑₛ₂) jeweils mit antiparalleler Rückarbeitsdiode, wobei diese Reihenschaltung an den ersten Pol der Gleichspannungsquelle und einen Verbindungspunkt zwischen dem Abschaltentlastungskondensator (C_{CL}) und der Clamp-Diode (D_{CL}) angeschlossen ist, und
einen Reihenschwingkreis bestehend aus einer Resonanzdrosselspule (L_{RES}) und einem Resonanzkondensator (C_{RES}), wobei eine in Richtung der Resonanzdrosselspule (L_{RES}) gepolte Resonanz-Diode (D_{RES}) parallel zum Resonanzkondensator (C_{RES}) geschaltet ist, wobei der Reihenschwingkreis an einem Verbindungspunkt zwischen dem ersten und zweiten Halbleiterschalter (Vᵣₑₛ₁, Vᵣₑₛ₂) und dem zweiten Pol der Gleichspannungsquelle angeschlossen ist, aufweist.

4. Schaltentlastungsnetzwerk für Leistungshalbleiterschalter, mit:
Leistungshalbleiterschaltern (V₁₁ bis V₁₆), die als Bestandteil einer Brückenschaltung zwischen einen ersten Pol einer Gleichspannungsquelle, den Anschlüssen einer Last und einen zweiten Pol der Gleichspannungsquelle, zusammen mit einer jedem Leistungshalbleiterschalter antiparallel geschalteten Rückarbeitsdioden (D₁₁ bis D₁₆) geschaltet sind,
einer Strombegrenzungsdrosselspule (L_{CL}) in der Zuleitung von der Gleichspannungsquelle zu den Leistungshalbleitern (V₁₁ bis V₁₆),
einem Abschaltentlastungskondensator (C_{CL}) parallel zu einem Schwingkreisstromrichter, wobei der Schwingkreisstromrichter zur Rückführung der überschüssigen Energie des Abschaltentlastungskondensators (C_{CL}) dient und unabhängig von den Leistungshalbleiterschaltern (V₁₁ bis V₁₆) ansteuerbar ist.

5. Schaltentlastungsnetzwerk für Leistungshalbleiterschalter nach Anspruch 4, zusätzlich mit
einer optionalen, zweiten Strombegrenzungsdrosselspule in der Rückleitung zu dem zweiten Pol der Gleichspannungsquelle.

6. Schaltentlastungsnetzwerk für Leistungshalbleiterschalter nach Anspruch 4 oder 5, wobei
der Schwingkreisstromrichter eine in Richtung des Abschaltentlastungskondensators (C_{CL}) gepolte Clamp-Diode (D_{CL}), die mit dem Abschaltentlastungskondensator (C_{CL}) in Reihe geschaltet ist, wobei die Reihenschaltung diodenseitig mit der Verbindungsstelle der Leistungshalbleiterschalter (V₁₁, V₁₃ und V₁₅) und der Einschaltentlastungsdrosselspule (L_{CL}) und kondensatorseitig mit der Verbindungsstelle der Leistungshalbleiterschalter (V₁₂, V₁₄ und V₁₆) mit der optionalen zweiten Strombegrenzungsdrosselspule oder dem zweiten Pol der Gleichspannungsquelle angeschlossen ist,
in Reihe verbundene erste und zweite Halbleiterschalter (Vᵣₑₛ₁, Vᵣₑₛ₂) jeweils mit antiparalleler Rückarbeitsdiode, wobei diese Reihenschaltung an den zweiten Pol der Gleichspannungsquelle und einen Verbindungspunkt zwischen Clamp-Kondensator (C_{CL}) und der Clamp-Diode (D_{CL}) angeschlossen ist,
eine Reihenschaltung aus einer ersten und einer zweiten in Richtung auf den ersten Pol der Gleichspannungsquelle gepolten Resonanzdiode (Dᵣₑₛ₃, Dᵣₑₛ₄), wobei die Reihenschaltung zwischen dem ersten und dem zweiten Pol der Gleichspannungsquelle verbunden ist, und
einen Reihenschwingkreis bestehend aus einer Resonanz-Spule (L_{RES}) und einem Resonanz-Kondensator (C_{RES}), wobei der Reihenschwingkreis an einem Verbindungspunkt zwischen dem ersten und zweiten Halbleiterschalter (Vᵣₑₛ₁, Vᵣₑₛ₂) und dem Verbindungspunkt der ersten und der zweiten Resonanz-Diode (Dᵣₑₛ₃, Dᵣₑₛ₄) angeschlossen ist,
aufweist.

7. Schaltentlastungsnetzwerk nach einem der Ansprüche 1 bis 6, wobei
die Clamp-Diode (D_{CL}) durch drei parallel geschaltete Reihenschaltungen jeweils aus einer Snubber-Diode (D_{SN}) und einer Clamp-Diode (D_{CL}) ersetzt ist, wobei die Snubber-Dioden (D_{SN}) direkt mit dem Verbindungspunkt zwischen der Einschaltentlastungsdrosselspule (L_{CL}) und den Leistungshalbleiterschaltern (V₁₁, V₁₃ und V₁₅) verbunden sind, und der Verbindungspunkt zwischen jeder Clamp-Diode (D_{CL}) und jeder Snubber-Diode (D_{SN}) jeweils über einen Snubber-Kondensator (C_{SN}) mit jeweils einem Verbindungspunkt zwischen zwei in Reihe geschalteten Leistungshalbleiterschaltern (V₁₁ und V₁₂, V₁₃ und V₁₄, V₁₅ und V₁₆) und dem jeweiligen Anschluss der Last verbunden ist.

8. Schaltentlastungsnetzwerk nach Anspruch 7, wobei
die Strombegrenzungsdrosselspule (L_{CL}) durch drei parallel geschaltete Strombegrenzungsdrosselspulen (L_{CL}) ersetzt ist, wobei jeder Verbindungspunkt zwischen einer Strombegrenzungsdrosselspule (L_{CL}) und einer zugehörigen Reihenschaltung aus zwei Leistungshalbleiterschaltern (V₁₁ und V₁₂, V₁₃ und V₁₄, V₁₅ und V₁₆) mit jeweils einer der Reihenschaltungen aus der Clamp-Diode (D_{CL}) und der weiteren Diode (D_{SN}) verbunden ist.

9. Schaltentlastungsnetzwerk für Leistungshalbleiterschalter nach einem der vorangehenden Ansprüche 1 bis 8, wobei
die Leistungshalbleiterschalter (V₁₁ bis V₁₆) und/oder die ersten und zweiten Halbleiterschalter (Vᵣₑₛ₁, Vᵣₑₛ₂) durch Insulated Gate Bipolar Transistoren (IGBTs), Gate Turn Off Thyristoren (GTOs), Hard Driven Gate Turn Off Thyristoren (HDGTOs), Integrated Gate Commutated Tyhristoren (IGCTs) gebildet werden.
